# EUROPÄISCHE PATENTANMELDUNG

(11) **EP 1 498 730 A1**
(43) Veröffentlichungstag der Anmeldung: **19.01.2005**
(21) Anmeldenummer: 04004099.0
(22) Anmeldetag: 24.02.2004
(51) Int. Cl.: G01N 27/90

(54) **Vorrichtung zur Wirbelstromprüfung**

(30) Priorität: 15.07.2003 DE 10331953
(71) Anmelder: EADS Space Transportation GmbH, 85521 Ottobrunn (DE)
(72) Erfinder: Wübker, Stefan, Dipl.-Ing., 26215 Wiefelstede (DE)
(74) Vertreter: Hansmann, Dierk, Dipl.-Ing.

(57) **Zusammenfassung**

Eine Vorrichtung zur Wirbelstromprüfung besteht aus wenigstens je einem Wirbelstromerzeuger und -empfänger, die in einem Wirbelstromprüfkopf (1) vereinigt sind sowie einem optischen Wegsensor (2) zur Ermittlung der Ortskoordinaten des Wirbelstromprüfkopfes (1), wobei der Wirbelstromprüfkopf (1) und der Wegsensor (2) zu einer gemeinsam bewegbaren Einheit zusammengefaßt sind. Der Wegsensor (2) seinerseits besteht aus einer Kameraeinheit und einem digitalen Signalprozessor, der die von der Kamera erzeugten Bilddaten verarbeitet und aus den Differenzen aufeinander folgender Bilder die Bewegungsrichtung und -weite des Wirbelstromprüfkopfes ermittelt und sie einer Auswerteeinheit (3) zuführt, wo diese mit den vom Wirbelstromprüfkopf (1) geliefertem Meßdaten korreliert werden. Die Kameraeinheit besteht aus einer lichtemittierenden Diode sowie einer der Diode zugeordneten optischen Detektionseinheit, vorzugsweise einem CMOS-Sensor.

## Beschreibung

Die Erfindung betrifft eine Vorrichtung zur Wirbelstromprüfung, bestehend aus wenigstens je einem Wirbelstromerzeuger und -empfänger, die in einem wirbelstromprüfkopf vereinigt sind, einer Einheit zur Ermittlung der Ortskoordinaten des Wirbelstromprüfkopfes und einer Auswerteeinheit zur Korrelation der Meßdaten des Wirbelstromprüfkopfes mit den jeweils zugehörigen Ortskoordinaten

Die derzeit bekannten Vorrichtungen dieser Art ordnen den bei Ihrer Anwendung ermittelten Inspektionsergebnissen die jeweiligen Koordinaten in Bezug auf die zu untersuchende Probe dadurch zu, daß die Prüfsonde an eine Scannereinrichtung, entweder einen X/Y-Scanner oder einen polaren Scanner, angeschlossen wird. Die Wirbelstromprüfdaten werden dann zusammen mit den von Scanner gelieferten Ortsinformationen abgespeichert, um auf diese Weise eine Auswertung auch zu einem späteren Zeitpunkt, nach dem Ende der Inspektion, zu ermöglichen. Derartige Vorrichtungen haben jedoch den Nachteil, daß sie in schwer zugänglichen, komplex strukturierten Umgebungen nur schlecht einzusetzen sind.

Aufgabe der Erfindung ist es, eine Vorrichtung der eingangs genannten Art derart auszubilden, daß sie einen möglichst geringen Raum beansprucht und somit möglichst vielseitig, insbesondere auch in nur schwer zugänglichen Bereichen, einsetzbar ist.

Die Erfindung löst diese Aufgabe dadurch, daß bei einer derartigen Vorrichtung der Wirbelstromprüfkopf mit einem optischen wegsensor zu einer gemeinsam bewegbaren Einheit zusammengefaßt ist. Der auf diese Weise direkt mit dem Wirbelstromprüfkopf gekoppelte Wegsensor erfaßt und protokolliert den Weg, den dieser Prüfkopf zurücklegt.

Die kompakte Bauweise der Vorrichtung nach der Erfindung ermöglicht die Inspektion auch von schwer zugänglichen Inspektionsorten, ohne dabei den Ortsbezug der gewonnenen Inspektionsdaten zu verlieren. Durch die bei der bevorzugten Ausführungsform der erfindungsgemäßen Vorrichtung vorgesehene verwendung einer lichtemittierenden Diode sowie eines sogenannten 'Complementary Metal-Oxide Semiconductor' oder CMOS-Sensors als der Diode zugeordnete optische Detektionseinheit kann eine hohe Auflösung erreicht werden, so daß hohe Genauigkeiten bei der Bestimmung von Schadensgrößen und der örtlichen Zuordnung der Schadensstelle relativ zu einem Bezugspunkt ermöglicht werden.

Der Aufbau des Ortssensors ist dabei im Prinzip bereits von anderen Vorrichtungen, wie optischen PC-Mäusen oder optischen Stiften, her bekannt. Diese Verwendung von bekannten Komponenten aus anderen Bereichen, wie PC-Mäusen, reduziert dabei zugleich den Entwicklungsaufwand und die Kosten und ermöglicht außerdem eine hohe Kompatibilität mit Standard-Hardware und Standardanwendungen für Computer.

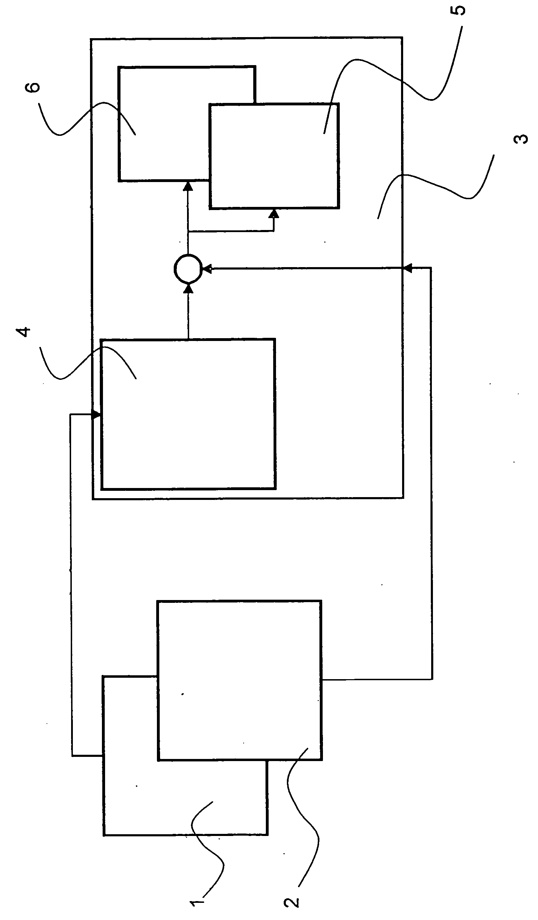

Nachfolgend soll die Erfindung anhand eines in der Zeichnung dargestellten Ausführungsbeispiels näher erläutert werden. Die Figur zeigt dabei den prinzipiellen Aufbau einer Wirbelstromprüfvorrichtung gemäß der Erfindung anhand eines Blockschaltbildes.

Die wirbelstromprüfvorrichtung besteht aus je Wirbelstromerzeuger und -empfänger, die in einem Wirbelstromprüfkopf oder -sensor 1 vereinigt sind. Dieser Wirbelstromsensor 1 ist mit einem Wegsensor 2 zu einer gemeinsam bewegbaren Baugruppe zusammengefaßt. Der Wegsensor 2 besteht im Fall des hier beschriebenen Ausführungsbeispiels aus einer CMOS Kamera, wie sie z.B. von optischen PC-Mäusen her bekannt ist, und einem digitalen Signalprozessor oder DSP, der die Bilddaten, die die CMOS-Kamera mit einer Rate von bis zu mehreren tausend von Bildern je Sekunde aufnimmt, verarbeitet. Aus den Differenzen der aufeinander folgenden Bilder errechnet der digitale Signalprozessor die Bewegungsrichtung und -weite des Sensors. Die CMOS Kamera wird dabei von einer lichtemittierenden Diode, oder LED, und einem 'Complementary Metal-Oxide Semiconductor' oder CMOS-Sensor als der Diode zugeordnete optische Detektionseinheit gebildet, mit der eine Auflösung von bis zu 800 cpi oder 0.03 Millimetern und damit eine entsprechend hohe Genauigkeit der Positionsmessung erreicht werden kann.

In einer Auswerteeinheit 3, vorzugsweise einem transportablen Rechner oder Laptop, werden die vom Wirbelstromsensor erzeugten Daten in einer zugeordneten Karte 4 ausgewertet und mit den entsprechenden, vom wegsensor 2 bereitgestellten Daten bezüglich der zugehörigen Ortskoordinaten zusammengeführt. Diese zugeordneten Daten werden farbkodiert auf einem Bildschirm 5 dargestellt und in einer Speichereinheit 6 für eine spätere Auswertung abgespeichert.

## Patentansprüche

1. Vorrichtung zur wirbelstromprüfung, bestehend aus wenigstens je einem Wirbelstromerzeuger und - empfänger, die in einem Wirbelstromprüfkopf vereinigt sind, einer Einheit zur Ermittlung der Ortskoordinaten des Wirbelstromprüfkopfes und einer Auswerteeinheit zur Korrelation der Meßdaten des Wirbelstromprüfkopfes mit den jeweils zugehörigen Ortskoordinaten, **dadurch gekennzeichnet, daß** der Wirbelstromprüfkopf (1) mit einem optischen Wegsensor (2) zu einer gemeinsam bewegbaren Einheit zusammengefaßt ist.

2. Vorrichtung nach Anspruch 1, **dadurch gekennzeichnet, daß** der Wegsensor (2) aus einer Kameraeinheit und einem digitalen Signalprozessor besteht, der die von der Kamera erzeugten Bilddaten verarbeitet und aus den Differenzen aufeinander folgender Bilder die Bewegungsrichtung und -weite des Wirbelstromprüfkopfes (1) ermittelt.

3. Vorrichtung nach Anspruch 2, **dadurch gekennzeichnet, daß** die Kameraeinheit aus einer lichtemittierenden Diode sowie einer der Diode zugeordneten optischen Detektionseinheit besteht.

4. Vorrichtung nach Anspruch 3, **dadurch gekennzeichnet, daß** die optische Detektionseinheit aus einem CMOS-Sensor besteht.
